# EUROPEAN PATENT APPLICATION

(11) **EP 4 568 376 A1**
(43) Date of publication of application: **11.06.2025**
(21) Application number: 22953459.9
(22) Date of filing: 01.08.2022
(51) Int. Cl.: H04W 72/04, H04L 5/00

(54) **SRS RESOURCE CONFIGURATION METHOD AND APPARATUS, MEDIUM, AND PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/109537
(87) International publication number: WO 2024/026644

(57) **Abstract**

The present disclosure discloses a method, device, medium and product for configuring SRS resources, which belongs to the field of communication. This method includes: configuring different groups of SRS resources (502) to a terminal, and the different groups of SRS resources associated with different panel information. In this method, the possible SRS resource configuration scheme of the terminal is given to support the uplink synchronous transmission of STxMP.

## Description

### TECHNICAL FIELD

The present disclosure relates to the field of communications, and in particular to a sounding reference signal (SRS) resource configuration method, apparatus, medium and product.

### BACKGROUND

In order to ensure the reliability and throughput of transmission, the related technology provides simultaneous transmission via multiple panels (STxMP) to transmission and receiving points (TRP) of multiple base stations through multiple panels on the terminal.

In the Multi-Panel-Single Transmission and Reception Point/Multi-Transmission and Reception Point (MP-STRP/MTRP) scenario, it is necessary to consider the SRS resource configuration scheme under different transmission schemes, and how to configure SRS resources is an urgent problem to be solved

### SUMMARY

The embodiment of the present disclosure provides an SRS resource configuration method, device, medium, and product, which can realize the SRS resource configuration in the MP-STRP/MTRP scenario. The technical solution is as follows:
According to one aspect of the embodiment of the present disclosure, a method for configuring an SRS resource is provided, which is executed by a network device, comprising:
configuring different groups of SRS resources to a terminal, and the different groups of SRS resources being associated with different panel information.

According to another aspect of the embodiment of the present disclosure, a method for configuring an SRS resource is provided, which is executed by a terminal, including:
receiving different groups of SRS resources configured by a network device, and different groups of SRS resources being associated with different panel information.

According to another aspect of the embodiment of the present disclosure, an SRS resources configuration device is provided, which includes:
a configuration module, configured to configure different groups of SRS resources to a terminal, and different groups of SRS resources being associated with different panel information.

According to another aspect of the embodiment of the present disclosure, an SRS resource configuration device is provided, which includes:
a receiving module, configured to receive different groups of SRS resources configured by a network device, and different groups of SRS resources being associated with different panel information.

According to another aspect of the embodiment of the present disclosure, a terminal is provided, which includes:
a processor;
a transceivers connected to the processor;
wherein the processor is configured to load and execute executable instructions to implement the method for configuring SRS resources in the various aspects above.

According to another aspect of the embodiment of the present disclosure, a network device is provided, which includes:
a processor;
a transceivers connected to the processor;
wherein the processor is configured to load and execute executable instructions to implement the method for configuring SRS resources in the various aspects above.

According to another aspect of the embodiment of the present disclosure, a chip is provided, wherein the chip includes programmable logic circuits and/or program instructions that, when the chip is running, is used to implement the method for configuring SRS resources in the various aspects above.

According to another aspect of the embodiment of the present disclosure, a computer-readable storage medium is provided, wherein at least one instruction, at least one program, a code set, or an instruction set is stored in the computer-readable storage medium, and at least one instruction, at least one program, code set, or instruction set is loaded and executed by a processor to realize a method for configuring SRS resources in various aspects above.

According to another aspect of the embodiment of the present disclosure, a computer program product (or computer program) is provided, and the computer program product (or computer program) includes computer instructions, and the computer instructions are stored in a computer-readable storage medium; and the processor of a computer device reads computer instructions from a computer-readable storage medium, and the processor executes the computer instructions so that the computer device performs the method for configuring SRS resources in various aspects above.

The technical solutions provided in the embodiments of the present disclosure may include the following beneficial effects:
Through uplink simultaneous transmission of multi-panel/multi-transmission and receiving points, to support higher uplink throughput rate and more reliable transmission performance, the possible SRS resource configuration scheme of the terminal is given to support STxMP.

### BRIEF DESCRIPTION OF THE DRAWINGS

In order to more clearly illustrate the technical solutions in the embodiments of the present disclosure, the accompanying drawings used in the description of the embodiments will be briefly introduced below, and it is obvious that the accompanying drawings in the following descriptions are only some embodiments of the present disclosure, and for those skilled in the art, other drawings can be obtained according to these accompanying drawings without creative labor.
Fig. 1 is a schematic diagram of a communication system provided according to an exemplary embodiment;
Fig. 2 is a schematic diagram of a communication system provided according to an exemplary embodiment;
Fig. 3 is a schematic diagram of the uplink transmission flow provided according to an exemplary embodiment;
Fig. 4 is a schematic diagram of the uplink transmission flow provided according to an exemplary embodiment;
Fig. 5 is a flowchart of the SRS resource configuration method provided according to an exemplary embodiment;
Fig. 6 is a flowchart of the SRS resource configuration method provided according to an exemplary embodiment;
Fig. 7 is a flowchart of the SRS resource configuration method provided according to an exemplary embodiment;
Fig. 8 is a flowchart of the SRS resource configuration method provided according to an exemplary embodiment;
Fig. 9 is a flowchart of the SRS resource configuration method provided according to an exemplary embodiment;
Fig. 10 is a flowchart of the SRS resource configuration method provided according to an exemplary embodiment;
FIG. 11 is a block diagram of the configuration device of the SRS resource provided according to an exemplary embodiment;
Fig. 12 is a block diagram of the configuration device of the SRS resource provided according to an exemplary embodiment;
Fig. 13 is a schematic diagram of the structure of a terminal provided according to an exemplary embodiment;
FIG. 14 is a schematic diagram of the structure of a network device provided according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatuses and methods consistent with some aspects of the embodiments of the present disclosure as detailed in the appended claims. Where, in the description of this disclosure, unless otherwise indicated, "/" means or, e.g., A/B may mean A or B; the word "and/or" in this article is merely a relational that describes the relationship of the associated object, indicating that there can be three kinds of relationships, for example, A and/or B, which can mean that there are three cases: A alone, A and B at the same time, and B alone.

The terms used in the present application are intended only to describe specific embodiments and are not intended to limit the present application. The singular forms "a", "said" and "the" used in the present application and the appended claims are also intended to include the plural forms as well, unless the context clearly indicates otherwise. It should also be understood that the term "and/or" as used herein refers to and includes any or all possible combinations of at least one associated listed items.

It should be understood that, although the terms first, second, third, etc., may be used to describe various types of information in the present application, such information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "upon" or "in response to determining."

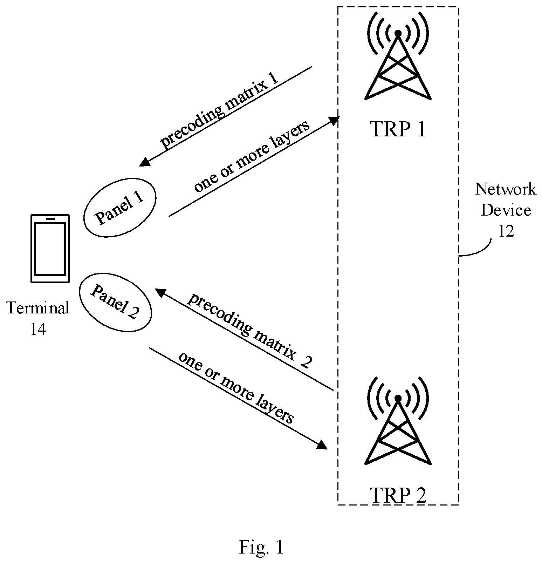

Fig. 1 shows a schematic diagram of the communication system provided by an exemplary embodiment of the present disclosure, and the communication system may include: a network device 12 and a terminal 14, and the network device 12 includes TRP 1, TRP 2.

The network device 12 may be a base station, and the base station is a device that provides wireless communication functions for the terminal 14. Base stations can include various forms of macro base stations, micro base stations, relay stations, access points, and more. In systems with different radio access technologies, the names of devices with base station capabilities may be different, for example, in Long Term Evolution (LTE) systems, they are called eNodeB (eNB); In the 5GNR system, it is called the next generation base station (gNodeB, gNB). As communications technology evolves, the description of "base station" is likely to change. For the convenience of the description in the embodiments of the present disclosure, the devices that provide wireless communication functions for the terminal 14 are collectively referred to as network device 12.

The terminal 14 may include a variety of handheld devices, vehicle-mounted devices, wearable devices, computing devices or other processing devices connected to wireless modems with wireless communication functions, as well as various forms of user equipment, mobile stations (MS), terminal devices and the like. For the sake of description, the devices mentioned above are collectively referred to as terminals.

For example, there are two communication scenarios between the network device 12 and the terminal 14: an uplink communication scenario and a downlink communication scenario. Wherein, uplink communication means that the terminal 14 sends a signal to the network device 12; downlink communication means that the network device 12 sends a signal to the terminal 14.

The uplink Physical Uplink Shared Channel (PUSCH) transmission is directed towards multiple Transmission and Reception Points (TRPs) of base stations. In Release 17 of the Third Generation Partnership Project (3GPP), the collaborative transmission under the Time Division Multiplexing (TDM) transmission mode was mainly standardized. The repetition of the same information on the PUSCH is sent to different TRPs of the base station at different Transmission Occasions (TOs) in the time domain. This method has relatively low requirements for terminal capabilities, does not require the ability to transmit beams simultaneously, and has a relatively large transmission delay.

For the uplink, the actual spatial characteristics of the PUSCH channels facing different TRPs may be very different, so it is considered that the spatial reception parameters of the PUSCH channels in different transmission directions are different.

In the enhancement goal of R18, it is mainly hoped that multiple panels of the terminal can achieve simultaneous cooperative transmission in multiple TRP directions to increase the reliability and throughput of transmission, and at the same time can effectively reduce the transmission delay under multiple TRPs, but the terminal is required to have the ability to transmit multiple beams at the same time. The transmission of PUSCH can be based on the multi-panel transmission of a single physical downlink control channel (PDCCH), that is, a single downlink control information (S-DCI) scheduling.

As shown in Fig. 1, a Downlink Control Information (DCI) directly or indirectly dispatches the precoding matrix 1 and the precoding matrix 2 to the terminal. Terminal 14 uses panel 1 to send one or more layers of uplink data to TRP 1 based on the precoding matrix 1. Terminal 14 uses panel 2 to send one or more layers of uplink data to TRP 1 based on the precoding matrix 2.

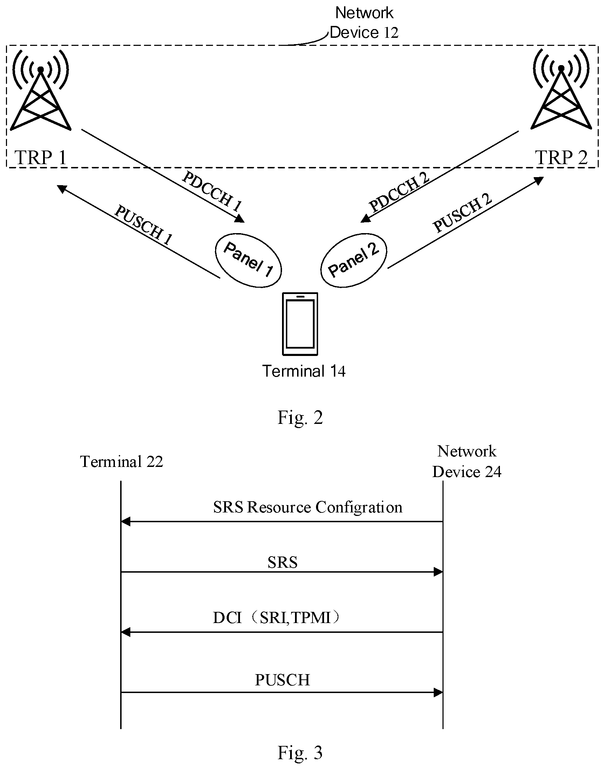

The transmission of PUSCH can also be based on different PDCCHs, that is, multi-panel transmission to multiple TRPs scheduled by Multi - Downlink Control Information (M - DCI), as shown in Fig. 2.

The transmission of PUSCH can also be based on the multi-panel transmission of different PDCCH, i.e., multi-downlink control information scheduling, as shown in Fig. 2.

TRP 1 sends the first DCI to terminal 14 through PDCCH 1, dispatching terminal 14 uses panel 1 to send PUSCH 1 to TRP 1, TRP 2 sends second DCI to terminal 14 through PDCCH 2, and dispatching terminal 14 sends PUSCH 2 to TRP 2 using panel 2.

TRP 1 and TRP 2 can be two TRPs of the same cell, or two TRPs of different cells.

In the STxMP scenario, the uplink transmission process includes the codebook-based uplink transmission process and the non-codebook-based uplink transmission process.

Fig. 3 shows a schematic diagram of the codebook-based uplink transmission flow provided by an exemplary embodiment of the present disclosure, which includes a terminal 22 and a network device 24.

In the codebook-based uplink transmission process, the network device 24 first sends an SRS resource configuration to the terminal 22, the SRS resource configuration includes at least one SRS resource and the time-frequency resource location of each SRS resource, then the terminal 22 sends at least one SRS to the network device 24 based on the SRS resource configuration, and the network device 24 obtains the channel information of each uplink channel based on at least one SRS received, and then provides DCI to the terminal 22, The DCI includes at least SRS Resource Indication (SRI) and Transmitted Precoding Matrix Indicator (TPMI), Finally, terminal 22 sends PUSCH to network device 24 based on SRI and TPMI.

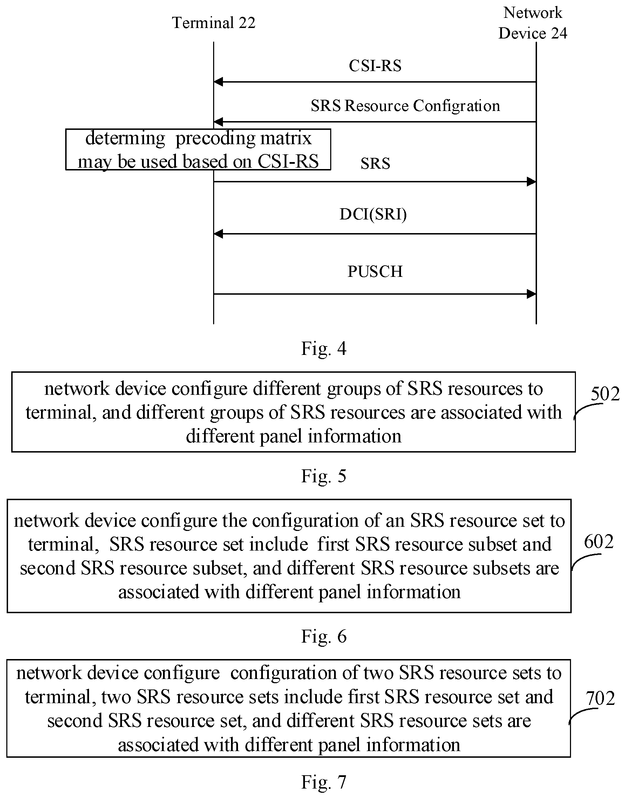

Fig. 4 shows a schematic diagram of the non-codebook-based uplink transmission flow provided by an exemplary embodiment of the present disclosure, which includes a terminal 22 and a network device 24.

In the non-codebook-based uplink transmission process, the precoding matrix is no longer limited to a fixed candidate set. The network device 24 first transmits a Channel State Information-Reference Symbol (CSI-RS) and SRS resource configuration information to the terminal 22, SRS resource configuration includes at least one SRS resource and the time-frequency resource position of each SRS resource, and then the terminal 22 calculates at least one precoding matrix that may be used based on the measurement results of CSI-RS through algorithms such as singular value decomposition, and then the terminal 22 sends at least one SRS to the network device 24 based on SRS resource configuration, The network device 24 obtains the channel situation of each uplink channel based on at least one SRS received, and then provides DCI to the terminal 22, and the DCI includes at least SRI, and finally the terminal 22 determines the precoding matrix to be used this time in the precoding matrix that may be used based on SRI, and sends a PUSCH to the network device 24 based on SRI and the precoding matrix used this time.

Fig. 5 shows a flow chart of the SRS resource configuration method provided by an example embodiment of the present disclosure, which is applied to the network device of the communication system shown in Fig. 1, and the method includes:
Step 502, the network device configures different groups of SRS resources to the terminal, and different groups of SRS resources are associated with different panel information.

The usage of SRS resources in different groups can be codebooks or non-codebooks.

Optionally, the different panel information includes at least one of the following:
different panels, the number of panels may be 2 or 4, and the default maximum is 2 in the embodiment of the present application;
different TRPs;
different TCI statuses;
different TOs.

In some embodiments, different groups of SRS resources include a first group of SRS resources and a second group of SRS resources as an example, and the first group of SRS resources is associated with the first panel of the terminal; the second set of SRS resources is associated with the second panel of the terminal.

In some embodiments, different groups of SRS resources include a first group of SRS resources and a second group of SRS resources as examples, where the first group of SRS resources is associated with the first TRP of the network device, and the first TRP sends DCI to the first panel; the second set of SRS resources is associated with the second TRP of the network device, and the second TRP sends DCI to the second panel.

In some embodiments, different groups of SRS resources include a first group of SRS resources and a second group of SRS resources as examples, where the first group of SRS resources is associated with the first TCI state of the terminal, and the first TCI state is used to indicate the beam sent to the first TRP; The second set of SRS resources is associated with the second TCI state of the terminal, which is used to indicate the beam sent to the second TRP.

In some embodiments, different groups of SRS resources include a first group of SRS resources and a second group of SRS resources as examples, where the first group of SRS resources is associated with the first TO of the terminal, and the first TO is used to send SRS to the first TRP; the second set of SRS resources is associated with the second TO of the terminal, which is used to send SRS to the second TRP.

In an embodiment, the configuration of the SRS resources includes any of the following four implementations:
Possible implementation 1: The number of SRS resources in different groups of SRS resources is the same, and the number of ports of SRS resources in different groups of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. There are two SRS resources in the second group, namely SRS resource 3 and SRS resource 4. There are two ports on SRS resource 3 and two ports on SRS resource 4.

Possible implementation 2: The number of SRS resources in different groups of SRS resources is the same, the number of ports of SRS resources in different groups of SRS resources is different, and the number of ports of SRS resources in the same group of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. There are two SRS resources in the second group, namely SRS resource 3 and SRS resource 4. There is one port for SRS resource 3 and one port for SRS resource 4.

Possible implementation 3: The number of SRS resources in different groups of SRS resources is different, and the number of ports of SRS resources in different groups of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. The second group of SRS resources consists of three SRS resources: SRS resource 3, SRS resource 4, and SRS resource 5. There are two ports for SRS resource 3, two ports for SRS resource 4, and two ports for SRS resource 5.

Possible implementation 4: The number of SRS resources in different groups of SRS resources is different, the number of ports of SRS resources in different groups of SRS resources is different, and the number of ports of SRS resources in the same group of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. The second group of SRS resources consists of three SRS resources: SRS resource 3, SRS resource 4, and SRS resource 5. There is one port for SRS resource 3, one port for SRS resource 4, and one port for SRS resource 5.

To sum up, the method provided in this embodiment is used to support higher uplink throughput rate and more reliable transmission performance through multi-panel/multi-transmission and simultaneous uplink transmission of receiving points, and a possible SRS resource configuration scheme for terminals is given to support STxMP.

There are at least two different ways to configure the above two sets of SRS resources:
Two groups of SRS resources belong to the same SRS resource set;
The different groups of SRS resources include a first group of SRS resources and a second group of SRS resources. The first set of SRS resources is the SRS resources in the first SRS resource subset, the second set of SRS resources is the SRS resources in the second SRS resource subset, and the first SRS resource subset and the second SRS resource subset belong to the same SRS resource set.

The first SRS resource set and the second SRS resource set are available for MP-STRP;
or
The first SRS resource set and the second SRS resource set apply to the Non-Coherent Joint transmission (NC-JT) as well as the coherent Joint transmission (C-JT) of the MP-MTRP.
- Two groups of SRS resources belong to different SRS resource sets.

The different groups of SRS resources include a first group of SRS resources and a second group of SRS resources. The first set of SRS resources is the SRS resources in the first SRS resource set, the second set of SRS resources is the SRS resources in the second SRS resource set, and the first SRS resource set and the second SRS resource set are different SRS resource sets.

The first SRS resource set and the second SRS resource set are available for MP-STRP;
or
The first SRS resource set and the second SRS resource set are available for NC-JT for MP-MTRP.

For two groups of SRS resources that belong to the same SRS resource set:
Fig. 6 shows a flowchart of the configuration method of the SRS resource provided by an exemplary embodiment of the present application. The present embodiment takes the method implemented by a network device as an example. The method includes:

Step 602, the network device configures the configuration of an SRS resource set to the terminal, which includes a first SRS resource subset and a second SRS resource subset, and different SRS resource subsets are associated with different panel information.

The usage of SRS resource set is codebook or non-codebook.

Optionally, the different panel information includes at least one of the following:
different panels, the number of panels may be 2 or 4, and the default maximum is 2 in the embodiment of the present application;
different TRPs;
different TCI statuses;
different TOs.

In some embodiments, the SRS resource set includes a first SRS resource subset and a second SRS resource subset as an example, and the first SRS resource subset is associated with a first panel of the terminal; The second SRS resource subset is associated with a second panel of the terminal.

In some embodiments, the SRS resource set includes a first SRS resource subset and a second SRS resource subset as an example, where the first SRS resource subset is associated with a first TRP of the network device, and the first TRP sends DCI to the first panel; The second SRS resource subset is associated with a second TRP of the network device, and the second TRP sends DCI to the second panel.

In some embodiments, the SRS resource set includes a first SRS resource subset and a second SRS resource subset as an example, where the first SRS resource subset is associated with a first TCI state of the terminal, and the first TCI state is used to indicate the beam sent to the first TRP; The second SRS resource subset is associated with a second TCI state of the terminal, which is used to indicate the beam sent to the second TRP.

In some embodiments, the SRS resource set includes a first SRS resource subset and a second SRS resource subset as an example, where the first SRS resource subset is associated with a first TO of the terminal, and the first TO is used to send SRS to the first TRP; The second SRS resource subset is associated with a second TO of the terminal, and the second TO is used to send the SRS to the second TRP.

In the present embodiment, the configuration of the SRS resource set includes any of the following four implementations:
Possible implementation 1: The number of SRS resources in different SRS resource subsets is the same, and the number of SRS resources in different SRS resource subsets is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are two subsets of the second SRS resource, which are SRS resource 3 and SRS resource 4. There are two ports on SRS resource 3 and two ports on SRS resource 4.

Possible implementation 2: The number of SRS resources in different SRS resource subsets is the same, the number of ports of SRS resources in different SRS resource subsets is different, and the number of ports of SRS resources in the same group of SRS resources is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are two subsets of the second SRS resource, which are SRS resource 3 and SRS resource 4. There is one port for SRS resource 3 and one port for SRS resource 4.

Possible implementation 3: The number of SRS resources in different SRS resource subsets is different, and the number of ports of SRS resources in different SRS resource subsets is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are three subsets of the second SRS resource, which are SRS resource 3, SRS resource 4, and SRS resource 5. There are two ports for SRS resource 3, two ports for SRS resource 4, and two ports for SRS resource 5.

Possible implementation 4: The number of SRS resources in different SRS resource subsets is different, the number of ports of SRS resources in different SRS resource subsets is different, and the number of ports of SRS resources in the same group of SRS resources is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are three subsets of the second SRS resource, which are SRS resource 3, SRS resource 4, and SRS resource 5. There is one port for SRS resource 3, one port for SRS resource 4, and one port for SRS resource 5.

In some embodiments, the division of the SRS resource set into two SRS resource subsets or two groups of SRS resources is predefined by the communication protocol, or related to the maximum number of layers supported by different panels, or configured by RRC parameters.

To sum up, the method provided in this embodiment realizes support for different panels through the configuration of an SRS resource set, can follow the configuration mode in the existing protocol as much as possible, modifies the communication protocol slightly, and can carry out better forward compatibility with the existing configuration mode.

For two groups of SRS resources that belong to different SRS resource sets:
Fig. 7 shows a flowchart of the configuration method of the SRS resource provided by an exemplary embodiment of the present application. The present embodiment takes the method implemented by a network device as an example. The method includes:
Step 702, the network device configures to the terminal the configuration of two SRS resource sets, which include a first SRS resource set and a second SRS resource set, and different SRS resource sets are associated with different panel information.

The usage of two SRS resource sets is codebook or non-codebook.

Optionally, the different panel information includes at least one of the following:
different panels, the number of panels may be 2 or 4, and the default maximum is 2 in the embodiment of the present application;
different TRPs;
different TCI statuses;
different TOs.

In some embodiments, two SRS resource sets are taken as examples, including a first SRS resource set and a second SRS resource set, where the first SRS resource set is associated with a first panel of the terminal; The second SRS resource set is associated with a second panel of the terminal.

In some embodiments, two SRS resource sets are taken as examples, where the first SRS resource set is associated with a first TRP of the network device, and the first TRP sends DCI to the first panel; The second SRS resource set is associated with a second TRP of the network device, and the second TRP sends DCI to the second panel.

In some embodiments, two SRS resource sets are taken as examples, including a first SRS resource set and a second SRS resource set, where the first SRS resource set is associated with a first TCI state of the terminal, and the first TCI state is used to indicate the beam sent to the first TRP; The second SRS resource set is associated with a second TCI state of the terminal, which is used to indicate the beam sent to the second TRP.

In some embodiments, two SRS resource sets are taken as examples, where the first SRS resource set is associated with a first TO of the terminal, and the first TO is used to send SRS to the first TRP; The second SRS resource set is associated with a second TO of the terminal, which is used to send the SRS to the second TRP.

In the present embodiment, the configuration of the two SRS resource sets includes any of the following four implementations:
Possible implementation 1: The number of SRS resources in different SRS resource sets is the same, and the number of ports of SRS resources in different SRS resource sets is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are two second SRS resource sets, namely SRS resource 3 and SRS resource 4. There are two ports on SRS resource 3 and two ports on SRS resource 4.

Possible implementation 2: The number of SRS resources in different SRS resource sets is the same, the number of ports of SRS resources in different SRS resource sets is different, and the number of ports of SRS resources in the same group of SRS resources is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are two second SRS resource sets, namely SRS resource 3 and SRS resource 4. There is one port for SRS resource 3 and one port for SRS resource 4.

Possible implementation 3: The number of SRS resources in different SRS resource sets is different, and the number of ports of SRS resources in different SRS resource sets is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are three second SRS resource sets, which are SRS resource 3, SRS resource 4, and SRS resource 5. There are two ports for SRS resource 3, two ports for SRS resource 4, and two ports for SRS resource 5.

Possible implementation 4: The number of SRS resources in different SRS resource sets is different, the number of ports of SRS resources in different SRS resource sets is different, and the number of ports of SRS resources in the same group of SRS resources is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are three second SRS resource sets, which are SRS resource 3, SRS resource 4, and SRS resource 5. There is one port for SRS resource 3, one port for SRS resource 4, and one port for SRS resource 5.

In some embodiments, the number of panels is N, then the number of SRS resource sets is N. In other embodiments, the number of panels is N, then the number of SRS resource sets is N/2, and each SRS resource set includes 2 SRS resource subsets. For example, N=4. This embodiment is not limited.

To sum up, the method provided in this embodiment supports different panels through the configuration of two SRS resource sets, so that different SRS resource sets correspond to different panels, and the SRS resource configuration of each panel is relatively independent, so as to achieve better configuration flexibility.

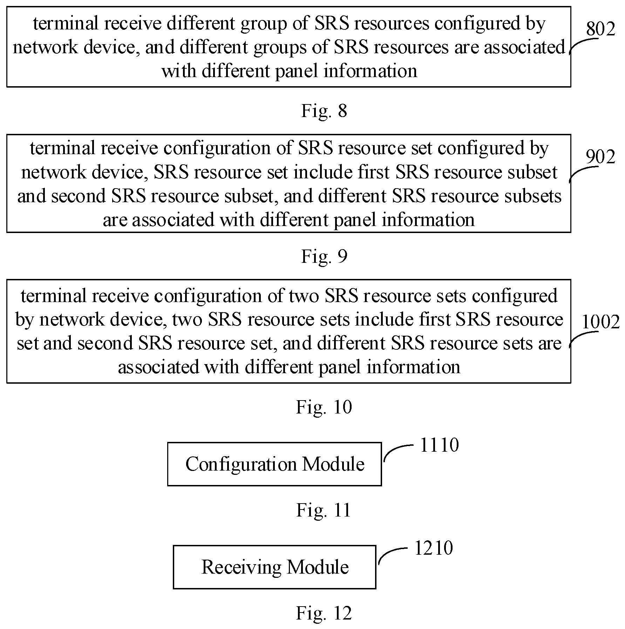

Fig. 8 shows a flowchart of the SRS resource configuration method provided by an example embodiment of the present disclosure, which is applied to the terminal of the communication system shown in Fig. 1, and the method includes:
Step 802, the terminal receives different groups of SRS resources configured by the network device, and different groups of SRS resources are associated with different panel information.

Different groups of SRS resources can be used for codebooks or non-codebooks.

Optionally, the different panel information includes at least one of the following:
different panels, the number of panels may be 2 or 4, and the default maximum is 2 in the embodiment of the present application;
different TRPs;
different TCI statuses;
different TOs.

In some embodiments, different groups of SRS resources include a first group of SRS resources and a second group of SRS resources as an example, and the first group of SRS resources is associated with the first panel of the terminal; The second set of SRS resources is associated with the second panel of the terminal.

In some embodiments, different groups of SRS resources include the first group of SRS resources and the second group of SRS resources as examples, where the first group of SRS resources is associated with a first TRP of the network device, and the first TRP sends DCI to the first panel; The second set of SRS resources is associated with a second TRP of the network device, and the second TRP sends DCI to the second panel.

In some embodiments, different groups of SRS resources including the first group of SRS resources and the second group of SRS resources are taken as examples, where the first group of SRS resources is associated with the first TCI state of the terminal, and the first TCI state is used to indicate the beam sent to the first TRP; The second set of SRS resources is associated with the second TCI state of the terminal, which is used to indicate the beam sent to the second TRP.

In some embodiments, different groups of SRS resources include a first group of SRS resources and a second group of SRS resources as examples, where the first group of SRS resources is associated with a first TO of the terminal, and the first TO is used to send SRS to the first TRP; The second set of SRS resources is associated with a second TO of the terminal, which is used to send SRS to the second TRP.

In this embodiment, the configuration of the SRS resource includes any of the following four implementations:
Possible implementation 1: The number of SRS resources in different groups of SRS resources is the same, and the number of ports of SRS resources in different groups of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. There are two SRS resources in the second group, namely SRS resource 3 and SRS resource 4. There are two ports on SRS resource 3 and two ports on SRS resource 4.

Possible implementation 2: The number of SRS resources in different groups of SRS resources is the same, the number of ports of SRS resources in different groups of SRS resources is different, and the number of ports of SRS resources in the same group of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. There are two SRS resources in the second group, namely SRS resource 3 and SRS resource 4. There is one port for SRS resource 3 and one port for SRS resource 4.

Possible implementation 3: The number of SRS resources in different groups of SRS resources is different, and the number of ports of SRS resources in different groups of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. The second group of SRS resources consists of three SRS resources: SRS resource 3, SRS resource 4, and SRS resource 5. There are two ports for SRS resource 3, two ports for SRS resource 4, and two ports for SRS resource 5.

Possible implementation 4: The number of SRS resources in different groups of SRS resources is different, the number of ports of SRS resources in different groups of SRS resources is different, and the number of ports of SRS resources in the same group of SRS resources is the same. For example, different groups of SRS resources include a first group of SRS resources and a second group of SRS resources. There are two SRS resources in the first group, namely SRS resource 1 and SRS resource 2. There are two ports for SRS resource 1 and two ports for SRS resource 2. The second group of SRS resources consists of three SRS resources: SRS resource 3, SRS resource 4, and SRS resource 5. There is one port for SRS resource 3, one port for SRS resource 4, and one port for SRS resource 5.

To sum up, the method provided in this embodiment is used to support higher uplink throughput rate and more reliable transmission performance through multi-panel/multi-transmission and simultaneous uplink transmission of receiving points, and a possible SRS resource configuration scheme for terminals is given to support STxMP.

There are at least two different ways to configure the above two sets of SRS resources:
Two groups of SRS resources belong to the same SRS resource set;
The different groups of SRS resources include a first group of SRS resources and a second group of SRS resources. The first set of SRS resources is the SRS resources in the first SRS resource subset, the second set of SRS resources is the SRS resources in the second SRS resource subset, and the first SRS resource subset and the second SRS resource subset belong to the same SRS resource set.

The first SRS resource set and the second SRS resource set are available for MP-STRP;
or
The first SRS resource set and the second SRS resource set are available for NC-JT and C-JT of MP-MTRP.
- Two groups of SRS resources belong to different SRS resource sets.

The different groups of SRS resources include a first group of SRS resources and a second group of SRS resources. The first group of SRS resources is the SRS resources in the first SRS resource set, the second group of SRS resources is the SRS resources in the second SRS resource set, and the first SRS resource set and the second SRS resource set are different SRS resource sets.

The first SRS resource set and the second SRS resource set are available for MP-STRP;
or
The first SRS resource set and the second SRS resource set are available for NC-JT for MP-MTRP.

For two groups of SRS resources that belong to the same SRS resource set:
Fig. 9 shows a flowchart of the configuration method of the SRS resource provided by an exemplary embodiment of the present application. The present embodiment is illustrated by the method implemented by a terminal. The method includes:
Step 902, the terminal receives the configuration of an SRS resource set configured by the network device, which includes a first SRS resource subset and a second SRS resource subset, and different SRS resource subsets are associated with different panel information.

The usage of SRS resource set is codebook or non-codebook.

Optionally, the different panel information includes at least one of the following:
different panels, the number of panels may be 2 or 4, and the default maximum is 2 in the embodiment of the present application;
different TRPs;
different TCI statuses;
different TOs.

In some embodiments, the SRS resource set includes a first SRS resource subset and a second SRS resource subset as an example, and the first SRS resource subset is associated with a first panel of the terminal; The second SRS resource subset is associated with a second panel of the terminal.

In some embodiments, the SRS resource set includes a first SRS resource subset and a second SRS resource subset as an example, where the first SRS resource subset is associated with a first TRP of the network device, and the first TRP sends DCI to the first panel; The second SRS resource subset is associated with a second TRP of the network device, and the second TRP sends DCI to the second panel.

In some embodiments, the SRS resource set includes a first SRS resource subset and a second SRS resource subset as an example, where the first SRS resource subset is associated with a first TCI state of the terminal, and the first TCI state is used to indicate the beam sent to the first TRP; The second SRS resource subset is associated with a second TCI state of the terminal, which is used to indicate the beam sent to the second TRP.

In some embodiments, the SRS resource set includes a first SRS resource subset and a second SRS resource subset as an example, where the first SRS resource subset is associated with a first TO of the terminal, and the first TO is used to send SRS to the first TRP; The second SRS resource subset is associated with a second TO of the terminal, and the second TO is used to send the SRS to the second TRP.

In the present embodiment, the configuration of the SRS resource set includes any of the following four implementations:
Possible implementation 1: The number of SRS resources in different SRS resource subsets is the same, and the number of SRS resources in different SRS resource subsets is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are two subsets of the second SRS resource, which are SRS resource 3 and SRS resource 4. There are two ports on SRS resource 3 and two ports on SRS resource 4.

Possible implementation 2: The number of SRS resources in different SRS resource subsets is the same, the number of ports of SRS resources in different SRS resource subsets is different, and the number of ports of SRS resources in the same group of SRS resources is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are two subsets of the second SRS resource, which are SRS resource 3 and SRS resource 4. There is one port for SRS resource 3 and one port for SRS resource 4.

Possible implementation 3: The number of SRS resources in different SRS resource subsets is different, and the number of ports of SRS resources in different SRS resource subsets is the same. For example, an SRS resource set includes a first SRS resource subset and a second SRS resource subset. There are two subsets of SRS resources, namely SRS resource 1 and SRS resource 2. There are two ports for SRS resource 1 and two ports for SRS resource 2. There are three subsets of the second SRS resource, which are SRS resource 3, SRS resource 4, and SRS resource 5. There are two ports for SRS resource 3, two ports for SRS resource 4, and two ports for SRS resource 5.

Possible implementation 4: The number of SRS resources in different SRS resource subsets is different, the number of ports of SRS resources in different SRS resource subsets is different, and the number of ports of SRS resources in the same group of SRS resources is the same. For example, an SRS resource set includes the first SRS resource subset and the second SRS resource subset. There are two subsets of SRS resources, namely SRS resource 1 and SRS resource 2. There are two ports for SRS resource 1 and two ports for SRS resource 2. There are three subsets of the second SRS resource, which are SRS resource 3, SRS resource 4, and SRS resource 5. There is one port for SRS resource 3, one port for SRS resource 4, and one port for SRS resource 5.

In some embodiments, the division of the SRS resource set into two SRS resource subsets or two groups of SRS resources is predefined by the communication protocol, or related to the maximum number of layers supported by different panels, or configured by RRC parameters.

To sum up, the method provided in this embodiment realizes support for different panels through the configuration of an SRS resource set, can follow the configuration mode in the existing protocol as much as possible, modifies the communication protocol slightly, and can carry out better forward compatibility with the existing configuration mode.

For two groups of SRS resources that belong to different SRS resource sets:
Fig. 10 shows a flowchart of the configuration method of the SRS resource provided by an exemplary embodiment of the present application. The present embodiment is illustrated by the method implemented by a terminal. The method includes:
Step 1002, the terminal receives the configuration of two SRS resource sets configured by the network device, the two SRS resource sets include a first SRS resource set and a second SRS resource set, and different SRS resource sets are associated with different panel information.

The usage of two SRS resource sets is codebook or non-codebook.

Optionally, the different panel information includes at least one of the following:
different panels, the number of panels may be 2 or 4, and the default maximum is 2 in the embodiment of the present application;
different TRPs;
different TCI statuses;
different TOs.

In some embodiments, two SRS resource sets are taken as examples, including a first SRS resource set and a second SRS resource set, where the first SRS resource set is associated with the first panel of the terminal; The second SRS resource set is associated with the second panel of the terminal.

In some embodiments, two SRS resource sets are taken as examples, where the first SRS resource set is associated with a first TRP of the network device, and the first TRP sends DCI to the first panel; The second SRS resource set is associated with a second TRP of the network device, and the second TRP sends DCI to the second panel.

In some embodiments, two SRS resource sets are taken as examples, including a first SRS resource set and a second SRS resource set, where the first SRS resource set is associated with the first TCI state of the terminal, and the first TCI state is used to indicate the beam sent to the first T RP; The second SRS resource set is associated with a second TCI state of the terminal, which is used to indicate the beam sent to the second TRP.

In some embodiments, two SRS resource sets are taken as examples, where the first SRS resource set is associated with a first TO of the terminal, and the first TO is used to send SRS to the first TRP; The second SRS resource set is associated with a second TO of the terminal, which is used to send the SRS to the second TRP.

In the present embodiment, the configuration of the two SRS resource sets includes any of the following four implementations:
Possible implementation 1: The number of SRS resources in different SRS resource sets is the same, and the number of ports of SRS resources in different SRS resource sets is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are two second SRS resource sets, namely SRS resource 3 and SRS resource 4. There are two ports on SRS resource 3 and two ports on SRS resource 4.

Possible implementation 2: The number of SRS resources in different SRS resource sets is the same, the number of ports of SRS resources in different SRS resource sets is different, and the number of ports of SRS resources in the same group of SRS resources is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are two second SRS resource sets, namely SRS resource 3 and SRS resource 4. There is one port for SRS resource 3 and one port for SRS resource 4.

Possible implementation 3: The number of SRS resources in different SRS resource sets is different, and the number of ports of SRS resources in different SRS resource sets is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are three second SRS resource sets, which are SRS resource 3, SRS resource 4, and SRS resource 5. There are two ports for SRS resource 3, two ports for SRS resource 4, and two ports for SRS resource 5.

Possible implementation 4: The number of SRS resources in different SRS resource sets is different, the number of ports of SRS resources in different SRS resource sets is different, and the number of ports of SRS resources in the same group of SRS resources is the same. For example, an SRS resource set includes a first SRS resource set and a second SRS resource set. There are two first SRS resource sets, namely SRS resource 1 and SRS resource 2. There are two ports for SRS resource 1 and two ports for SRS resource 2. There are three second SRS resource sets, which are SRS resource 3, SRS resource 4, and SRS resource 5. There is one port for SRS resource 3, one port for SRS resource 4, and one port for SRS resource 5.

In some embodiments, the number of panels is N, then the number of SRS resource sets is N. In other embodiments, the number of panels is N, then the number of SRS resource sets is N/2, and each SRS resource set includes 2 SRS resource subsets. For example, N=4. This embodiment is not limited.

To sum up, the method provided in this embodiment supports different panels through the configuration of two SRS resource sets, so that different SRS resource sets correspond to different panels, and the SRS resource configuration of each panel is relatively independent, so as to achieve better configuration flexibility.

Fig. 11 shows a block diagram of the configuration apparatus for SRS resources provided by an exemplary embodiment of the present disclosure, which includes:
A configuration module 1110, configured for configuring different groups of SRS resources to the terminal, and different groups of SRS resources are associated with different panel information.

In one possible design of the present embodiment, the different panel information includes at least one of the following information:
different panels;
different TRPs;
different TCI statuses;
different TOs.

In one possible design of the present embodiment, the usage of different groups of SRS resources is codebook or non-codebook.

In a possible design of the present embodiment, different groups of SRS resources include a first group of SRS resources and a second group of SRS resources;

The first set of SRS resources is associated with the first panel information of the terminal.

The second set of SRS resources is associated with the second panel information of the terminal.

In one possible design of the present embodiment, the number of SRS resources in different groups of SRS resources is the same, and the number of ports of SRS resources in different groups of SRS resources is the same.

In a possible design of the present embodiment, the number of SRS resources in different groups of SRS resources is the same, the number of ports of SRS resources in different groups of SRS resources is different, and the number of ports of SRS resources in the same group of SRS resources is the same.

In one possible design of the present embodiment, the number of SRS resources in different groups of SRS resources is different, and the number of ports of SRS resources in different groups of SRS resources is the same.

In one possible design of the present embodiment, the number of SRS resources in different groups of SRS resources is different, the number of ports of SRS resources in different groups of SRS resources is different, and the number of ports of SRS resources in the same group of SRS resources is the same.

In a possible design of the present embodiment, different groups of SRS resources include a first group of SRS resources and a second group of SRS resources;

The first set of SRS resources is the SRS resources in the first SRS resource subset, the second set of SRS resources is the SRS resources in the second SRS resource subset, and the first SRS resource subset and the second SRS resource subset belong to the same SRS resource set.

In one possible design of the present embodiment, the first SRS resource set and the second SRS resource set are applicable to the MP-STRP;
or
The first SRS resource set and the second SRS resource set are available for NC-JT and C-JT of MP-MTRP.

In a possible design of the present embodiment, different groups of SRS resources include a first group of SRS resources and a second group of SRS resources;
The first set of SRS resources is the SRS resources in the first SRS resource set, the second set of SRS resources is the SRS resources in the second SRS resource set, and the first SRS resource set and the second SRS resource set are different SRS resource sets.

In one possible design of the present embodiment, the first SRS resource set and the second SRS resource set are applicable to the MP-STRP;
or
The first SRS resource set and the second SRS resource set are available for NC-JT for MP-MTRP.

Fig. 12 shows a block diagram of the configuration apparatus for SRS resources provided by an exemplary embodiment of the present disclosure, which includes:
A receiving module 1210, configured for receiving different groups of SRS resources configured by the network device, and different groups of SRS resources are associated with different panel information. In one possible design of the present embodiment, the different panel information includes at least one of the following information:
different panels;
different TRPs;
different TCI statuses;
different transmission occasions.

In one possible design of the present embodiment, the usage of different groups of SRS resources is codebook or non-codebook.

In a possible design of the present embodiment, different groups of SRS resources include a first group of SRS resources and a second group of SRS resources;

The first set of SRS resources is associated with a first panel information of the terminal.

The second set of SRS resources is associated with a second panel information of the terminal.

In one possible design of the present embodiment, the number of SRS resources in different groups of SRS resources is the same, and the number of ports of SRS resources in different groups of SRS resources is the same.

In a possible design of the present embodiment, the number of SRS resources in different groups of SRS resources is the same, the number of ports of SRS resources in different groups of SRS resources is different, and the number of ports of SRS resources in the same group of SRS resources is the same.

In one possible design of the present embodiment, the number of SRS resources in different groups of SRS resources is different, and the number of ports of SRS resources in different groups of SRS resources is the same.

In one possible design of the present embodiment, the number of SRS resources in different groups of SRS resources is different, the number of ports of SRS resources in different groups of SRS resources is different, and the number of ports of SRS resources in the same group of SRS resources is the same.

In a possible design of the present embodiment, different groups of SRS resources include a first group of SRS resources and a second group of SRS resources;

The first set of SRS resources is the SRS resources in the first SRS resource subset, the second set of SRS resources is the SRS resources in the second SRS resource subset, and the first SRS resource subset and the second SRS resource subset belong to the same SRS resource set.

In one possible design of the present embodiment, the first SRS resource set and the second SRS resource set are applicable to the MP-STRP;
or
The first SRS resource set and the second SRS resource set are available for NC-JT and C-JT of MP-MTRP.

In a possible design of the present embodiment, different groups of SRS resources include a first group of SRS resources and a second group of SRS resources;

The first set of SRS resources is the SRS resources in the first SRS resource set, the second set of SRS resources is the SRS resources in the second SRS resource set, and the first SRS resource set and the second SRS resource set are different SRS resource sets.

In one possible design of the present embodiment, the first SRS resource set and the second SRS resource set are applicable to the MP-STRP;
or
The first SRS resource set and the second SRS resource set are available for NC-JT for MP-MTRP.

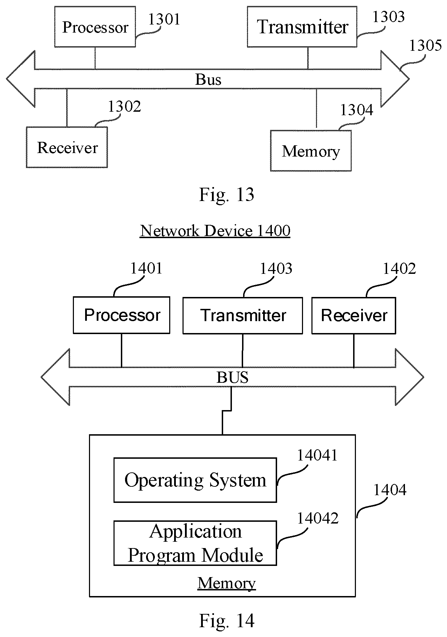

Fig. 13 shows a schematic diagram of the structure of a terminal provided in an exemplary embodiment of the present disclosure, which includes: a processor 1301, a receiver 1302, a transmitter 1303, a memory 1304 and a bus 1305.

The processor 1301 includes one or more processing cores, and the processor 1301 performs various functional applications and information processing by running software programs and modules.

The receiver 1302 and the transmitter 1303 can be implemented as a communication component, and the communication component may be a communication chip.

The memory 1304 is connected to the processor 1301 through bus 1305.

The memory 1304 may be used to store at least one instruction, and the processor 1301 is used to execute at least one instruction to implement each step in the method embodiment.

In addition, the memory 1304 can be implemented by any type of volatile or non-volatile storage device or a combination thereof, and the volatile or non-volatile storage devices include but are not limited to: magnetic disks or optical disks, Electrically Erasable Programmable Read Only Memory (EEPROM), Erasable Programmable Read Only Memory (EPROM), Static Random-Access Memory (SRAM), Read Only Memory (ROM), magnetic memory, flash memory, Programmable Read Only Memory (PROM).

In the exemplary embodiment, a non-temporary computer-readable storage medium including instructions, such as a memory including instructions, which may be executed by the processor of a terminal to complete the configuration method of the SRS resource. For example, non-ephemeral computer-readable storage media can be ROM, Random-Access Memory (RAM), Compact Disc Read Only Memory (CD-ROM), tape, floppy disks and optical data storage devices, etc.

FIG. 14 is a block diagram of a network device 1400 shown according to an exemplary embodiment, and the network device 1400 may be a base station.

The network device 1400 may include: a processor 1401, a receiver 1402, a transmitter 1403, and a memory 1404. The receiver 1402, the transmitter 1403 and the memory 1404 are respectively connected with the processor 1401 through a bus.
wherein the processor 1401 includes one or more processing cores, and the processor 1401 performs the SRS resource configuration method provided in the embodiment of the present disclosure by running a software program and a module. Memory 1404 can be used to store software programs as well as modules. Specifically, memory 1404 can store operating system 14041, application program module 14042 required for at least one function. The receiver 1402 is used for receiving communication data sent by other devices, and the transmitter 1403 is used for sending communication data to other devices.

An exemplary embodiment of the present disclosure also provides a computer-readable storage medium, in which at least one instruction, at least one program, code set or instruction set is stored, and at least one instruction, at least one program, code set or instruction set is loaded and executed by a processor to realize the configuration method of the SRS resources provided by the above method embodiments.

An exemplary embodiment of the present disclosure also provides a computer program product, where the computer program product includes computer instructions, and the computer instructions are stored in a computer-readable storage medium; The processor of the computer device reads computer instructions from a computer-readable storage medium, and the processor executes the computer instructions, causing the computer equipment to perform a configuration method for SRS resources provided by the above method embodiments.

It should be understood that the reference to "multiple" in this article refers to two or more of them. Other embodiments of the disclosure will be readily apparent to those skilled in the art from consideration of the specification and practice of the contents disclosed herein. The present disclosure is intended to cover any variations, uses, or adaptations of the present disclosure, which follows the general principles thereof and includes the common knowledge or customary technical means in the technical field that are not disclosed in the present disclosure. It is intended that the specification and embodiments be considered as exemplary only, with a true scope and spirit of the present disclosure being indicated by the appending claims.

It is to be understood that the present disclosure is not limited to the precise structures described above and illustrated in the accompanying drawings, and various modifications and changes may be made without departing from the scope thereof. The scope of the present disclosure is limited only by the appended claims.

## Claims

1. A sounding reference signal (SRS) resources configuration method, wherein the method is executed by a network device, and comprises:
configuring different groups of SRS resources to a terminal, and the different groups of SRS resources being associated with different panel information.

2. The method of claim 1, wherein the different panel information comprises at least one of the following information:
different panels;
different transmission and reception points (TRP);
different transport configuration indicate (TCI) statuses; and
different transmission occasions.

3. The method of claim 1, wherein the different groups of SRS resources are used for codebooks or non-codebooks.

4. The method of any one of claims 1 to 3, wherein the different groups of SRS resources comprise a first group of SRS resources and a second group of SRS resources;
the first group of SRS resources is associated with a first panel information of the terminal;
the second group of SRS resources is associated with a second panel information of the terminal.

5. The method of any one of claims 1 to 3, wherein the number of SRS resources in different groups of SRS resources is the same, and the number of ports of the SRS resources in different groups of SRS resources is the same.

6. The method of any one of claims 1 to 3, wherein the number of SRS resources in different groups of SRS resources is the same, the number of ports of the SRS resources in the different groups of SRS resources is different, and the number of ports of the SRS resources in the same group of SRS resources is the same.

7. The method of any one of claims 1 to 3, wherein the number of SRS resources in different groups of SRS resources is different, and the number of ports of the SRS resources in different groups of SRS resources is the same.

8. The method of any one of claims 1 to 3, wherein the number of SRS resources in different groups of SRS resources is different, the number of ports of the SRS resources in different groups of SRS resources is different, and the number of ports of the SRS resources in the same group of SRS resources is the same.

9. The method of any one of claims 1 to 8, wherein the different groups of SRS resources comprise a first group of SRS resources and a second group of SRS resources;
the first group of SRS resources is a SRS resource in a first SRS resources subset, the second group of SRS resources is a SRS resource in a second SRS resources subset, and the first SRS resources subset and the second SRS resources subset belong to the same SRS resource set.

10. The method of claim 9, wherein,
the first SRS resource set and the second SRS resource set are suitable for multi-panel single transmission and receiving point (MP-STRP);
or
the first SRS resource set and the second SRS resource set are suitable for the incoherent transmission (NC-JT) and the coherent transmission (C-JT) of the multi-panel, multi-transmission and receiving point (MP-MTRP).

11. The method of any one of claims 1 to 8, wherein the different groups of SRS resources comprise a first group of SRS resources and a second group of SRS resources;
the first group of SRS resources is a SRS resource in a first SRS resource set, the second group of SRS resources is a SRS resource in a second SRS resource set, and the first SRS resource set and the second SRS resource set are different SRS resource sets.

12. The method of claim 11, wherein:
the first SRS resource set and the second SRS resource set are applicable to MP-STRP;
or
the first SRS resource set and the second SRS resource set are applicable to NC-JT of MP-MTRP.

13. An SRS resource configuration method, wherein the method is executed by a terminal, and the method comprises:
receiving different groups of SRS resources configured by a network device, the different groups of SRS resources being associated with different panel information.

14. The method of claim 13, wherein the different panel information comprises at least one of the following information:
different panels;
different TRPs;
different TCI statuses;
different transmission occasions.

15. The method of claim 13, wherein the different groups of SRS resources are used for codebooks or non-codebooks.

16. The method of any one of claims 13 to 15, wherein the different groups of SRS resources comprise a first group of SRS resources and a second group of SRS resources;
the first group of SRS resources is associated with a first panel information of the terminal;
the second group of SRS resources is associated with a second panel information of the terminal.

17. The method of any one of claims 13 to 15, wherein the number of SRS resources in different groups of SRS resources is the same, and the number of ports of the SRS resources in the different groups of SRS resources is the same.

18. The method of any one of claims 13 to 15, wherein the number of SRS resources in different groups of SRS resources is the same, the number of ports of the SRS resources in the different groups of SRS resources is different, and the number of ports of the SRS resources in the same group of SRS resources is the same.

19. The method of any one of claims 13 to 15, wherein the number of SRS resources in different groups of SRS resources is different, and the number of ports of the SRS resources in different groups of SRS resources is the same.

20. The method of any one of claims 13 to 15, wherein the number of SRS resources in different groups of SRS resources is different, the number of ports of the SRS resources in different groups of SRS resources is different, and the number of ports of the SRS resources in the same group of SRS resources is the same.

21. The method of any one of claims 13 to 20, wherein the different groups of SRS resources comprise a first group of SRS resources and a second group of SRS resources;
the first group of SRS resources is a SRS resource in a first SRS resources subset, the second group of SRS resources is an SRS resource in a second SRS resources subset, and the first SRS resources subset and the second SRS resources subset belong to the same SRS resource set.

22. The method of claim 21, wherein:
the first SRS resource set and the second SRS resource set are applicable to MP-STRP;
or
the first SRS resource set and the second SRS resource set are applicable to NC-JT and C-JT of MP-MTRP.

23. The method of any one of claims 13 to 20, wherein the different groups of SRS resources comprise a first group of SRS resources and a second group of SRS resources;
the first group of SRS resources is an SRS resource in a first SRS resource set, the second group of SRS resources is an SRS resource in a second SRS resource set, and the first SRS resource set and the second SRS resource set are different SRS resource sets.

24. The method of claim 22, wherein:
the first SRS resource set and the second SRS resource set are applicable to MP-STRP;
or
the first SRS resource set and the second SRS resource set are applicable to NC-JT of MP-MTRP.

25. An SRS resource configuration device, comprising:
a configuration module, configured to configure different groups of SRS resources to a terminal, and the different groups of SRS resources being associated with different panel information.

26. An SRS resource configuration device, comprising:
a receiving module, configured to receive different groups of SRS resources configured by a network device, and the different groups of SRS resources being associated with different panel information.

27. A network device, comprising:
a processor; and
a transceiver connected to the processor;
wherein the processor is configured to load and execute executable instructions to implement a method for configuring SRS resources according to any one of claims 1 to 12.

28. A terminal, wherein the terminal comprises:
a processor; and
a transceiver connected to the processor;
wherein the processor is configured to load and execute executable instructions to implement a method for configuring SRS resources according to any one of claims 13 to 24.

29. A chip, wherein the chip comprises a programmable logic circuit and/or program instructions that, when the chip is running, is used to implement a method for configuring SRS resources according to any one of claims 1 to 12, or according to any one of claims 13 to 24.

30. A computer-readable storage medium, wherein at least one instruction, at least a program, a code set, or an instruction set is stored in the computer-readable storage medium, and at least one instruction, at least one program, or at least one code set, or instruction set is loaded and executed by a processor to realize a method for configuring SRS resources according to any one of claims 1 to 12, or, a method for configuring SRS resources according to 13 to 24.

31. A computer program product, wherein the computer program product comprises computer instructions, and the computer instructions are stored in a computer-readable storage medium; the processor of the computer apparatus reads the computer instruction from the computer-readable storage medium, and the processor executes the computer instruction so that the computer apparatus performs the method of configuring SRS resources according to any one of claims 1 to 12, or the method of configuring SRS resources according to any one of claims 13 to 24.
